# EUROPEAN PATENT SPECIFICATION

(11) **EP 1 977 880 B1**
(45) Date of publication and mention of the grant of the patent: **15.09.2010**
(21) Application number: 07425201.6
(22) Date of filing: 05.04.2007
(51) Int. Cl.: B29C 53/80, B29C 70/16

(54) **Axial roving distributor for a machine suitable to produce tubular elements made of composite material**
Faserstrangaxialverteiler für eine Maschine zur Herstellung röhrenförmiger Elemente aus einem Verbundmaterial
Distributeur axial de roving pour une machine adaptée à la fabrication d'éléments tubulaires en matériau composite

(43) Date of publication of application: 08.10.2008
(73) Proprietor: VEM S.p.A., 40033 Casalecchio di Reno (Bologna) (IT)
(72) Inventor: Ferri, Ugo, 20146 Milano (IT); Fratti, Giovanni, 33058 San Giorgio di Nogaro (Prov. of Udine) (IT)
(74) Representative: Alagem Modiano, Lara S.

(56) References cited:
- EP-A1- 0 027 098
- DE-A1- 2 060 261

## Description

The present invention relates to an axial roving distributor for a machine suitable to produce tubular elements made of composite material.

Tubular articles made of composite material are produced generally as known e.g. from EP-A-27098 by wrapping a plurality of structural roving fibers on a reference element and by applying suitable resins designed to mutually consolidate the roving.

It should be noted that the tubular articles, at the end of the forming process, can also undergo thermal treatments designed to polymerize (crosslink) the resins and therefore give the necessary structural rigidity to the entire article.

The suitable structural rigidity of the tubular body is obtained by arranging the roving along specific privileged directions: in practice, some roving fibers are wrapped around the peripheral circumference of the tubular body, ensuring that the body can withstand radial stresses, such as for example those caused by a pressurized fluid conveyed inside it; other roving fibers are arranged longitudinally, with respect to the tubular body, along the directions of the generatrices of the envelope cylinder or substantially parallel to said generatrices, in order to provide axial rigidity.

The arrangement of the structural roving along these two privileged directions can be achieved by wrapping a fabric of roving (constituted by weft and warp) around the tubular body. This solution entails high raw material costs, since an intermediate component (a fabric made of roving fiber, generally pre-impregnated with resin) is used instead of simple roving.

As an alternative, it is possible to resort to the arrangement of the simple roving fibers according to specific arrangement criteria set by production technologies.

A machine capable of arranging the roving along the two directions of interest comprises a main distributor, which supplies the roving fibers which are wrapped onto the tubular body, and a second distributor, which deposits portions of roving fiber (or of clumps of roving fibers) of preset length longitudinally with respect to the tubular body on its outer surface.

The great distribution of these longitudinal roving fiber portions causes the overall rigidity of the tubular body, once the resins have polymerized (cross-linked), to be optimum despite the various interruptions of the roving fiber (upstream and downstream of each portion).

On the other hand, however, the regions of discontinuity of the portions are substantially possible trigger areas for fractures of the tubular body when such body is subjected to intense axial stresses.

The machine further requires several manual adjustments for initial setup, depending on the type of tubular body to be provided, enormously penalizing installation costs.

The aim of the present invention is to provide an axial roving distributor for a machine suitable to produce tubular elements made of composite material, said distributor being adapted to provide a tubular body which has optimum axial rigidity and whose longitudinal reinforcement fibers are continuous and have no interruptions.

Within this aim, an object of the present invention is to provide an axial roving distributor for a machine suitable to produce tubular elements made of composite material, which is capable of setting the distribution criteria automatically as a function of the type of tubular body being provided.

Another object of the present invention is to provide an axial roving distributor for a machine suitable to produce tubular elements made of composite material which has a low cost, is relatively easy to provide in practice and is safe in application.

This aim and these and other objects which will become better apparent hereinafter are achieved by the present axial roving distributor for a machine suitable to produce tubular elements made of composite material of the type comprising a structure for supporting and moving the tubular body being formed, a unit for supplying structural roving which is arranged, monolithically with respect to the frame of the machine, substantially transversely to said tubular body, the rotation of which wraps said roving fibers which arrive from said unit onto said body, characterized in that it comprises at least one secondary magazine for collecting the roving wound on spools, which is arranged on a respective carriage which can perform an axial translational motion with respect to said tubular body on a respective track which is rigidly coupled to a support which is associated with the frame of said machine, said carriage performing a reciprocating longitudinal translational motion from a first configuration for protrusion in front of the structural roving deposited on the tubular body by said unit to a second configuration of similar rearward protrusion.

Further characteristics and advantages of the present invention will become better apparent from the following detailed description of a preferred but not exclusive embodiment of an axial roving distributor for a machine suitable to produce tubular elements made of composite material, illustrated by way of non-limiting example in the accompanying drawings, wherein:

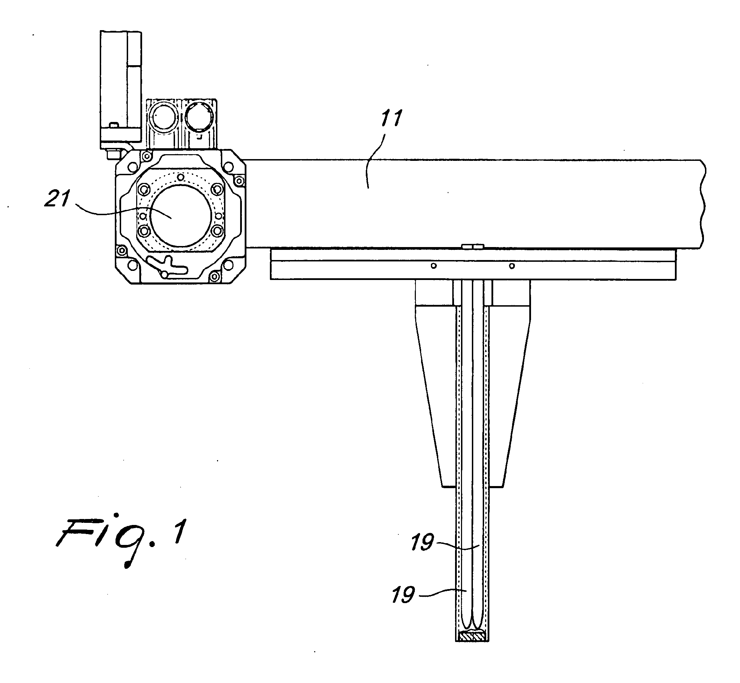

Figure 1 is a side view of a first embodiment of an axial roving distributor for a machine suitable to produce tubular elements made of composite material according to the invention;

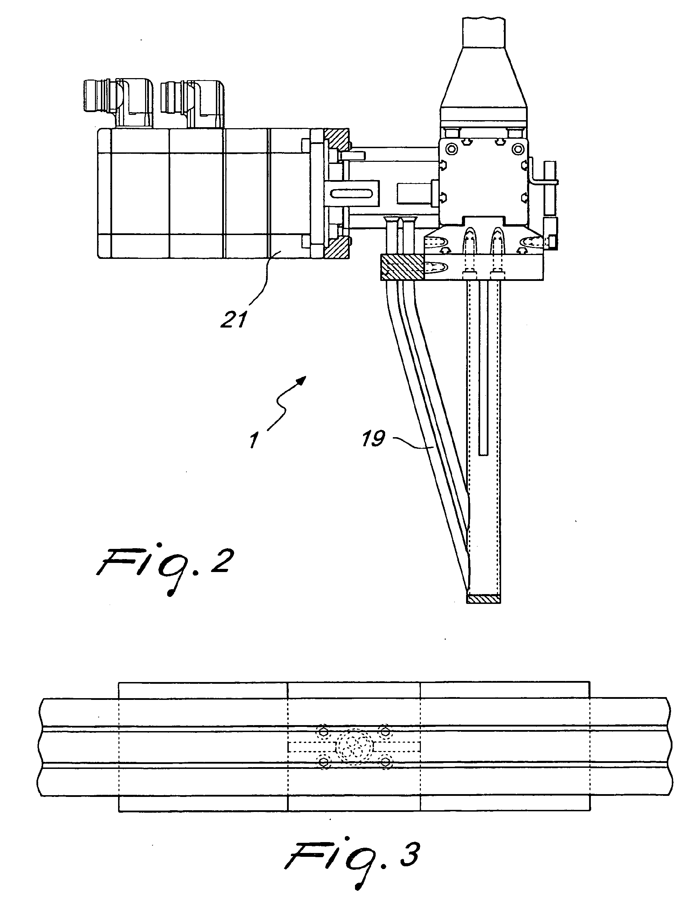

Figure 2 is a front view of the first embodiment of an axial roving distributor for a machine suitable to produce tubular elements made of composite material according to the invention;
Figure 3 is a bottom view of the first embodiment of an axial roving distributor for a machine suitable to produce tubular elements made of composite material according to the invention;

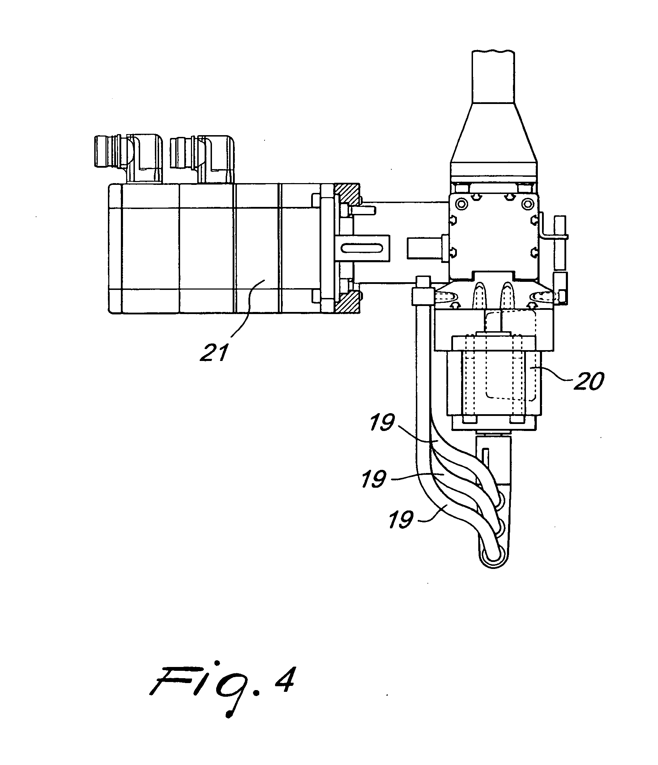

Figure 4 is a side view of a second embodiment of an axial roving distributor for a machine suitable to produce tubular elements made of composite material according to the invention;

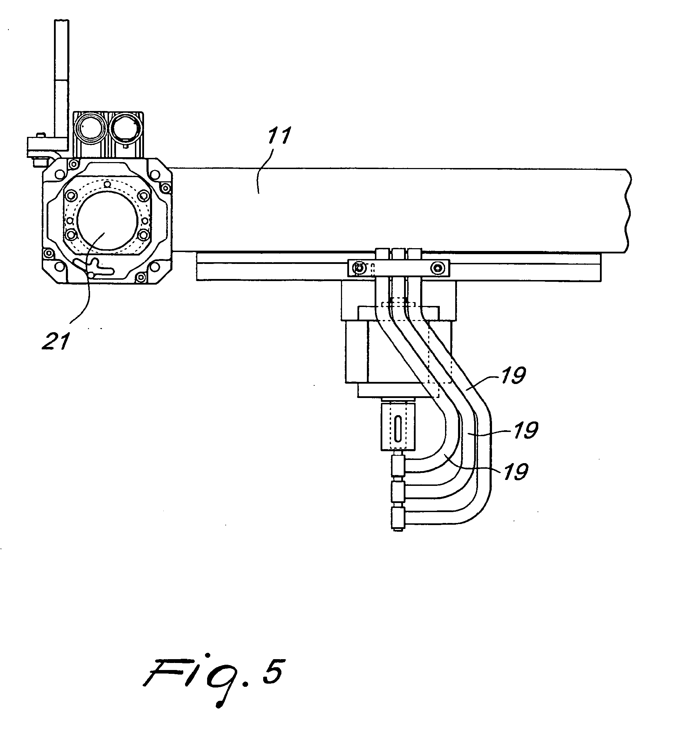

Figure 5 is a front view of the second embodiment of an axial roving distributor for a machine suitable to produce tubular elements made of composite material according to the invention;

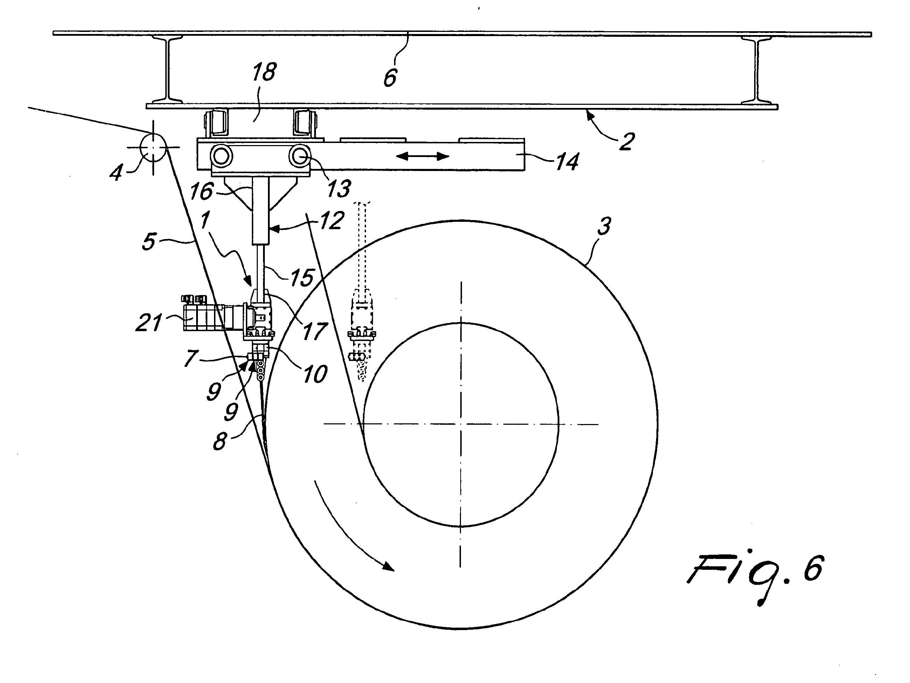

Figure 6 is a front view of a machine suitable to produce tubular elements made of composite material provided with an axial roving distributor according to the invention;

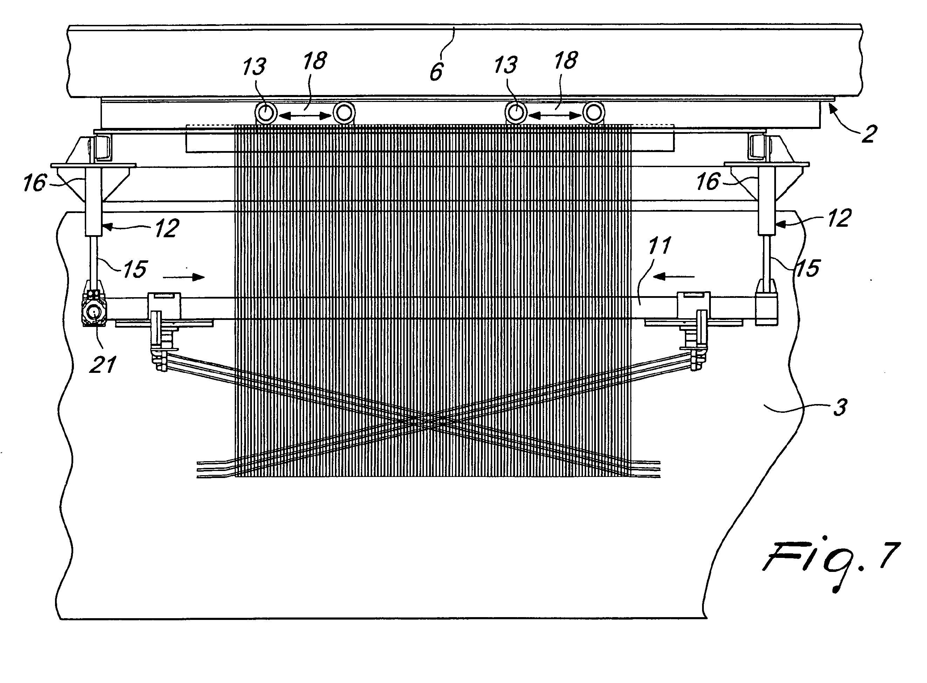

Figure 7 is a top view of the machine suitable to produce tubular elements made of composite material provided with an axial roving distributor according to the invention.

With reference to the figures, the reference numeral 1 generally designates an axial roving distributor for a machine 2 which is suitable to produce tubular articles 3 made of composite material.

The machine 2 comprises a structure (not shown in the figure and stably associated with the ground) for supporting and moving the tubular body 3 being formed, and a unit 4 for supplying structural roving 5 which is arranged, monolithically with the frame 6 of the machine 2, substantially transversely with respect to the tubular body 3.

The rotation of the body 3 wraps the fibers 5 which arrive from the unit 4 onto the body 3.

The distributor 1 comprises at least one secondary magazine 7 for collecting the roving 8 wound on appropriately provided spools 9: the secondary magazine 7 is arranged on a respective carriage 10, which can perform an axial translational motion with respect to the tubular body 3 on a respective track 11 which is rigidly coupled to a support 12, which can optionally be movable and is associated with the frame 6.

In particular, the association between the carriage 10 and the support 12 can be achieved by interposing a sliding block 13, which can slide on a guiding rail 14 which is rigidly coupled to the frame 6. The rail 14 is conveniently arranged transversely with respect to the longitudinal axis of the tubular body 3 in order to be able to position correctly the carriage 10 independently of the outside diameter of the tubular body 3 being formed.

Positively, the support 12 can also comprise a respective linear actuator 15, which has an end 16 which is substantially rigidly coupled to the frame 6 (even with an indirect association due to the possible interposition of the sliding block 13 and of the rail 14) and an opposite end 17 which is associated, even indirectly, with the carriage 10: the carriage 10 therefore can perform a vertical translational motion by way of the action of the linear actuator 15.

Optionally, it is also possible to provide an additional upper guide 18, along which the entire block constituted by the carriage 10, the actuator 15 and the rail 14 can perform a translational motion parallel to the longitudinal axis of the tubular body 3.

The simultaneous presence of the guiding rail 14, of the sliding block 10 and of the linear actuator 15 allows the carriage 10 to perform a translational motion transversely to the tubular body 3 both horizontally and vertically.

During the operation of the machine 2, the carriage 10 performs a reciprocating longitudinal translational motion from a first configuration in which it protrudes in front of the structural roving fibers deposited on the tubular body 3 by the unit 4 to a second configuration providing a similar rear protrusion.

For this purpose, the track 11 protrudes both at the front and at the rear with respect to the surface where the roving fibers 5 are applied to the tubular body 3 by the unit 4.

The distributor 1 comprises at least one stem 19 for conveying the fibers 8 that originate from the respective spools 9 onto the lateral surface of the tubular body 3.

A rotating actuator 20 for the controlled rotation of the secondary magazine 7 with respect to the carriage 10 is comprised between the secondary collection magazine 7 and the carriage 10, according to a particular embodiment which is of particular practical interest and safe in application: in this manner, when the carriage 10 reaches the end of its stroke (at one of the previously defined front or rear limit configurations), a rotation through 180° of the carriage 10 with respect to the secondary magazine 7 allows constant and correct alignment of the fibers without overlaps which might cause fracture triggering points due to the tensions that might be triggered thereat.

For this purpose, the stem 20 for conveying the roving fibers 8 is of a substantially directional type; the rotation of the secondary magazine 7 with respect to the carriage 10 is in fact necessary to keep the directional stem 20, and therefore the roving fibers 8 deposited thereby, correctly aligned with the tubular body 3.

According to an embodiment of particular interest, the distributor 1 comprises a fixed movement assembly 21, which is coupled on one of the ends of the track 11, associated with the carriage 10 by means of transmission elements. The carriage 10 can therefore perform a translational motion on the track 11 by way of the action of the movement assembly 21.

It is convenient to note the presence of a device which is designed to maintain the tension of the roving fibers 8 during their deposition on the tubular body 3. The movement (longitudinally with respect to the body 3) might in fact cause, in certain configurations (especially the end ones), a lack of tension of the roving fibers which, by being loose, might catch in structural parts of the machine 2 or in any case be deposited incorrectly, consequently reducing the mechanical performance of the tubular body 3 being formed. The device designed to maintain the tension of the roving fibers 8 is none other than an arm which is associated with the carriage 10 (or with another part rigidly coupled thereto), provided with a spring which ensures that it maintains a given position: the arm has, at its end, a sort of receptacle for accommodating the roving fibers 8.

It has thus been shown that the invention achieves the intended aim and objects.

The invention thus conceived is susceptible of numerous modifications and variations, all of which are within the scope of the appended claims.

All the details may further be replaced with other technically equivalent ones.

In the exemplary embodiments that follow, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An axial roving distributor for a machine (2) suitable to produce tubular elements (3) made of composite material of the type comprising a structure for supporting and moving the tubular body (3) being formed, a unit (4) for supplying structural roving (5) which is arranged, monolithically with respect to the frame (6) of the machine (2), substantially transversely to said tubular body (3), the rotation of which wraps said roving fibers (5) which arrive from said unit (4) onto said body (3), **characterized in that** it comprises at least one secondary magazine (7) for collecting the roving (8) wound on spools (9), which is arranged on a respective carriage (10) which can perform an axial translational motion with respect to said tubular body (3) on a respective track (11) which is rigidly coupled to a support (12) which is associated with the frame (6) of said machine (2), said carriage (10) performing a reciprocating longitudinal translational motion from a first configuration for protrusion in front of the structural roving (5) deposited on the tubular body (3) by said unit (4) to a second configuration of similar rearward protrusion.

2. The distributor according to claim 1, **characterized in that** said track (11) protrudes both at the front and at the rear with respect to the surface where said fibers (5) are fed to said tubular body (3) by said unit (4).

3. The distributor according to claim 1, **characterized in that** it comprises at least one stem (19) for conveying the roving fibers (8) which arrive from the respective spools (9) on the lateral surface of said tubular body (3).

4. The distributor according to claim 1, **characterized in that** a rotary actuator (20) is comprised between said secondary collection magazine (7) and said carriage (10) for the controlled rotation of the secondary magazine (7) with respect to the carriage (10).

5. The distributor according to claim 3, **characterized in that** said stem (19) for conveying the fibers (8) which arrive from the rerspective spools on the lateral surface of said tubular body (3) is of a substantially directional type, the rotation of the secondary magazine (7) with respect to said carriage (10) being necessary in order to keep the directional stem (20), and therefore the roving (8) deposited thereby, correctly aligned with the tubular body (3).

6. The distributor according to claim 1, **characterized in that** it comprises a fixed movement assembly (21), which is rigidly coupled on one of the ends of said track (11), which is associated with said carriage (10) by means of transmission elements, said carriage (10) being able to perform a translational motion on said track (11) due to the action of said movement assembly (21).

7. The distributor according to claim 1, **characterized in that** said support (12) is associated in an upper region with respect to a sliding block (13) which can slide on a guiding rail (14) which is rigidly coupled to said frame (6), said rail (14) being arranged transversely with respect to the longitudinal axis of said tubular body (3).

8. The distributor according to claim 1, **characterized in that** said support (12) comprises a respective linear actuator (15) which has an end (16) which is substantially rigidly coupled to said frame (6) and an opposite end (17) which is associated, even indirectly, with said carriage (10), said carriage (10) being able to perform a vertical translational motion by way of the action of said linear actuator (15).

9. The distributor according to claims 7 and 8, **characterized in that** it comprises said guiding rail (14) for said sliding block (13) and said linear actuator (15), said carriage (10) being able to perform a translational motion transversely to said tubular body (3) both horizontally and vertically.

## Patentansprüche

1. Axialer Roving-Verteiler für eine Maschine (2) des Typs, der zur Herstellung aus Verbundmaterial bestehender röhrenförmiger Elemente (3) geeignet ist, umfassend eine Struktur zum Halten und Bewegen des gebildeten röhrenförmigen Körpers (3), eine Einheit (4) zur Zuführung strukturellen Rovings (5), welche in Bezug auf den Rahmen (6) der Maschine (2) monolithisch, im Wesentlichen quer zu dem röhrenförmigen Körper (3) angeordnet ist, dessen Drehung die Roving-Fasern (5), welche von der Einheit (4) ankommen, auf den Körper (3) aufwickelt, **dadurch gekennzeichnet, dass** er mindestens ein Sekundärmagazin (7) zum Sammeln des auf Spulen (9) gewickelten Rovings (8) aufweist, welches auf einem entsprechenden Wagen (10) angeordnet ist, welcher eine axiale translatorische Bewegung bezüglich des röhrenförmigen Körpers (3) auf einer entsprechenden Führungsbahn (11) ausführen kann, welche starr mit einer Halterung (12) gekoppelt ist, welche mit dem Rahmen (6) der Maschine (2) in Verbindung steht, wobei der Wagen (10) eine hin und her gehende translatorische Längsbewegung von einer ersten Stellung, die vor dem strukturellen Roving (5) hervorsteht, der mittels der Einheit (4) auf dem röhrenförmigen Körper (3) abgelagert wird, zu einer zweiten Stellung ausführt, die in ähnlicher Weise nach hinten vorsteht.

2. Verteiler nach Anspruch 1, **dadurch gekennzeichnet, dass** die Führungsbahn (11) in Bezug auf die Fläche, wo die Fasern (5) dem röhrenförmigen Körper (3) mittels der Einheit (4) zugeführt werden, sowohl nach vorn als auch nach hinten hervorsteht.

3. Verteiler nach Anspruch 1, **dadurch gekennzeichnet, dass** er mindestens einen Schaft (19) zur Führung der Roving-Fasern (8) aufweist, welche von den entsprechenden Spulen (9) an der Seitenfläche des röhrenförmigen Körpers (3) ankommen.

4. Verteiler nach Anspruch 1, **dadurch gekennzeichnet, dass** ein Drehantrieb (20) zwischen dem sekundären Sammelmagazin (7) und dem Wagen (10) zur gesteuerten Drehung des Sekundärmagazins (7) in Bezug auf den Wagen (10) vorgesehen ist.

5. Verteiler nach Anspruch 3, **dadurch gekennzeichnet, dass** der Schaft (19) zur Führung der Fasern (8), welche von den entsprechenden Spulen an der Seitenfläche des röhrenförmigen Körpers (3) ankommen, von einem im Wesentlichen gerichteten Typ ist, wobei die Drehung des Sekundärmagazins (7) in Bezug auf den Wagen (10) notwendig ist, um den gerichteten Schaft (20) und damit den durch diesen abgelegten Roving (8) korrekt zu dem röhrenförmigen Körper (3) ausgerichtet zu halten.

6. Verteiler nach Anspruch 1, **dadurch gekennzeichnet, dass** er eine feststehende Bewegungsbaugruppe (21) aufweist, welche starr mit einem der Enden der Führungsbahn (11) gekoppelt ist, welche mittels Übertragungselementen mit dem Wagen (10) in Verbindung steht, wobei der Wagen (10) in der Lage ist, eine translatorische Bewegung auf der Führungsbahn (11) aufgrund der Einwirkung der Bewegungsbaugruppe (21) auszuführen.

7. Verteiler nach Anspruch 1, **dadurch gekennzeichnet, dass** die Halterung (12) einem oberen Bereich in Bezug auf einen Gleitblock (13) angehört, welcher auf einer Führungsschiene (14) gleiten kann, welche starr mit dem Rahmen (6) gekoppelt ist, wobei die Schiene (14) in Bezug auf die Längsachse des röhrenförmigen Körpers (3) quer angeordnet ist.

8. Verteiler nach Anspruch 1, **dadurch gekennzeichnet, dass** die Halterung (12) einen entsprechenden Linearantrieb (15) auweist,
welcher ein Ende (16), welches im Wesentlichen starr mit dem Rahmen (6) gekoppelt ist, und ein entgegengesetztes Ende (17) hat, welches, nur indirekt, mit dem Wagen (10) in Verbindung steht, wobei der Wagen (10) in der Lage ist, eine vertikale translatorische Bewegung mittels der Einwirkung des Linearantriebs (15) auszuführen.

9. Verteiler nach Anspruch 7 und 8, **dadurch gekennzeichnet, dass** er die Führungsschiene (14) für den Gleitblock (13) und den Linearantrieb (15) aufweist, wobei der Wagen (10) in der Lage ist, eine translatorische Bewegung quer zu dem röhrenförmigen Körper (3) sowohl horizontal als auch vertikal auszuführen.

## Revendications

1. Distributeur axial de mèche pour une machine (2) convenant pour produire des éléments tubulaires (3) formés d'un matériau composite, du type comprenant une structure pour supporter et déplacer le corps tubulaire (3) en formation, une unité (4) pour délivrer une mèche structurelle (5), qui est aménagée, de manière monolithique par rapport au châssis (6) de la machine (2), sensiblement transversalement audit corps tubulaire (3), dont la rotation enroule lesdites fibres de mèche (5) qui arrivent de ladite unité (4) sur ledit corps (3), **caractérisé en ce qu'**il comprend au moins un caisson secondaire (7) pour recueillir la mèche (8) enroulée sur des bobines (9), qui est aménagé sur un chariot respectif (10) qui peut effectuer un déplacement axial de translation par rapport audit corps tubulaire (3) sur une voie respective (11) qui est couplée de manière rigide à un support (12) qui est associé au châssis (6) de ladite machine (2), ledit chariot effectuant un mouvement longitudinal de translation en va-et-vient d'une première configuration en saillie devant la mèche structurelle (5) déposée sur le corps tubulaire (3) par ladite unité (4) à une seconde configuration en saillie similaire à l'arrière.

2. Distributeur selon la revendication 1, **caractérisé en ce que** ladite voie (11) fait saillie à la fois à l'avant et à l'arrière par rapport à la surface où lesdites fibres (5) sont acheminées audit corps tubulaire (3) par ladite unité (4).

3. Distributeur selon la revendication 1, **caractérisé en ce qu'**il comprend au moins une tige (19) pour transporter les fibres de mèche (8) qui arrivent des bobines respectives (9) sur la surface latérale dudit corps tubulaire (3).

4. Distributeur selon la revendication 1, **caractérisé en ce qu'**un dispositif d'actionnement rotatif (20) est compris entre ledit caisson collecteur secondaire (7) et ledit chariot (10) pour la rotation contrôlée du caisson secondaire (7) par rapport au chariot (10).

5. Distributeur selon la revendication 3, **caractérisé en ce que** ladite tige (19) pour le transport des fibres (8) qui arrivent des bobines respectives sur la
surface latérale dudit corps tubulaire (3) est d'un type sensiblement directionnel, la rotation du caisson secondaire (7) par rapport audit chariot (10) étant nécessaire pour maintenir la tige directionnelle (20) et donc la mèche (8) déposée de ce fait, dans l'alignement correct avec le corps tubulaire (3).

6. Distributeur selon la revendication 1, **caractérisé en ce qu'**il comprend un ensemble de déplacement fixe (21), qui est couplé de manière rigide à l'une des extrémités de ladite voie (11), qui est associée audit chariot (10) au moyen d'éléments de transmission, ledit chariot (10) étant à même d'effectuer un mouvement de translation sur ladite voie (11) en raison de l'action dudit ensemble de déplacement (21).

7. Distributeur selon la revendication 1, **caractérisé en ce que** ledit support (12) est associé dans une région supérieure à un bloc coulissant (13) qui peut coulisser sur un rail de guidage (14) qui est couplé de manière rigide audit châssis (6), ledit rail (14) étant aménagé transversalement à l'axe longitudinal dudit corps tubulaire (3).

8. Distributeur selon la revendication 1, **caractérisé en ce que** ledit support (12) comprend un dispositif d'actionnement linéaire respectif (15) qui a une extrémité (16) qui est couplée de manière sensiblement rigide audit châssis (6) et une extrémité opposée (17) qui est associée, même indirectement, audit chariot (10), ledit chariot (10) étant à même d'effectuer un mouvement vertical de translation en raison de l'action dudit dispositif d'actionnement linéaire (15).

9. Distributeur selon les revendications 7 et 8, **caractérisé en ce qu'**il comprend ledit rail de guidage (14) pour ledit bloc coulissant (13) et ledit dispositif d'actionnement linéaire (15), ledit chariot (10) étant à même d'effectuer un mouvement de translation transversalement audit corps tubulaire (3) à la fois horizontalement et verticalement.
